Europäisches Patentamt

European Patent Office

Office européen des brevets

(11) Veröffentlichungsnummer: **0 303 834**
A1

## (12) EUROPÄISCHE PATENTANMELDUNG

(21) Anmeldenummer: 88111584.4

(22) Anmeldetag: 19.07.88

(51) Int. Cl.4: **B29C 45/17**

(30) Priorität: 18.08.87 AT 2069/87

(43) Veröffentlichungstag der Anmeldung:
22.02.89 Patentblatt 89/08

(84) Benannte Vertragsstaaten:
BE CH DE FR GB IT LI NL SE

(71) Anmelder: **Engel Maschinenbau Gesellschaft m.b.H.**

**A-4311 Schwertberg(AT)**

(72) Erfinder: **Steinbichler, Georg**
**Brückmühl 66**
**A-8786 Rottenmann(AT)**

(74) Vertreter: **Hofinger, Engelbert et al**
**Torggler-Hofinger Wilhelm-Greil-Strasse 16**
**A-6020 Innsbruck(AT)**

(54) **Spritzgiessform.**

(57) Eine Spritzgießform mit mindestens einem austauschbaren Wechseleinsatz (6), der mittels einer Verriegelungseinrichtung in der Form gehalten ist. Die Verriegelungseinrichtung umfaßt mindestens einen kraftbeaufschlagten Spannteil, der in der Form verschiebbar ist, am Wechseleinsatz angreift und diesen in die Form hineinzieht. Der Spannteil ist pneumatisch oder hydraulisch beaufschlagt. Der Spannteil ist entweder eine Kolbenstange (9) oder ein Schieber (20).

Fig. 2

EP 0 303 834 A1

Die Erfindung bezieht sich auf eine Spritzgießform mit mindestens einem austauschbaren Wechseleinsatz, der mittels einer Verriegelungseinrichtung in der Form gehalten ist.

Spritzgießmaschinen, bei denen derartige Formen Verwendung finden, sind beispielsweise in der Europäischen Patentschrift 88100 der Anmelderin beschrieben.

Für die Produktion von geometrieähnlichen Formteilen auf Kunststoffverarbeitungs- und Metalldruckgußmaschinen müssen in vielen Fällen nur Einsätze im Stammwerkzeug, d.h. in der eigentlichen Spritzgießform gewechselt werden. Bei herkömmlichen Spritzgießformen mit Formeinsätzen sind letztere mit der Spritzgießform verschraubt. Ein Austauschen des Formeinsatzes ist sehr arbeitsintensiv und verlangt daher lange Umrüstzeiten. In vielen Fällen erfordert das Austauschen des Formeinsatzes das Abnehmen der Spritzgießform von der Maschine.

Aufgabe der Erfindung ist es, eine Spritzgießform der eingangs erwähnten Art zu schaffen, bei der ein Wechsel des Formeinsatzes mit geringem Rüstzeitverlust direkt auf der Maschine erfolgen kann. Weiters soll erfindungsgemäß ein automatischer Wechsel vorgewärmter Einsätze möglich sein.

Die erfindungsgemäße Aufgabe wird dadurch gelöst, daß die Verriegelungseinrichtung mindestens einen kraftbeaufschlagbaren Spannteil umfaßt, der am Wechseleinsatz angreift und in der Form verschiebbar ist.

Der Spannteil ist pneumatisch oder hydraulisch beaufschlagbar.

Ein Ausführungsbeispiel der Erfindung sieht vor, daß der Spannteil eine Kolbenstange umfaßt, die mit einem doppelt wirkenden Kolben verbunden ist und daß die Bewegungsrichtung der Kolbenstange senkrecht zur Formtrennebene verläuft.

In einem weiteren Ausführungsbeispiel ist vorgesehen, daß die Kolbenstange beim Wechseleinsatz mit einer T-Nut versehen ist, in die ein Haltemittel des Wechseleinsatzes, insbesondere eine Halteschraube, einschiebbar ist, wobei die Einschieberichtung des Haltemittels in die T-Nut senkrecht zur Verschieberichtung der Kolbenstange ist.

Die T-Nut ist vorteilhaft einseitig offen.

Um ein automatisches Zentrieren des Formeinsatzes zu erreichen, ist vorteilhaft vorgesehen, daß dieser einen Zentrierkonus aufweist, der formschlüssig in der Spritzgießform aufgenommen ist.

Ein weiteres Ausführungsbeispiel der Erfindung sieht vor, daß der Spannteil ein Schieber ist, der in einer Ebene, die parallel zur Formtrennebene liegt, verfahrbar ist.

Dabei ist vorteilhaft vorgesehen, daß der Schieber vorne keilförmig ist und im keilförmigen Bereich einen T-förmigen Querschnitt aufweist, wobei der Wechseleinsatz an mindestens einer Seite mit einer schräg verlaufenden Nut versehen ist, in die ein Steg des Schiebers einschiebbar ist.

Der Wechseleinsatz kann vorteilhaft zylindrisch sein, wobei sich die Nut über etwa zwei Drittel der Breite des Wechseleinsatzes erstreckt und daß sich vor der Nut eine Ausnehmung befindet, die von einer Anschlagfläche für den Schieber begrenzt ist.

Ein weiteres Ausführungsbeispiel sieht vor, daß der Schieber an Haltebolzen des Wechseleinsatzes angreift.

Vorteilhaft ist vorgesehen, daß an der Seite einer Platte der Spritzgießform ein Spannzylinder montiert ist, der den Schieber betätigt.

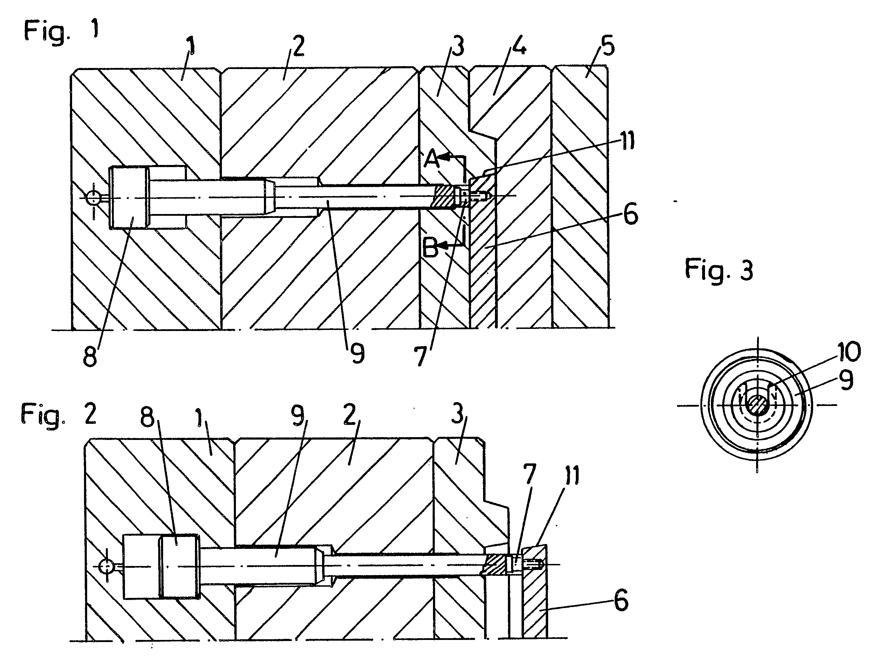

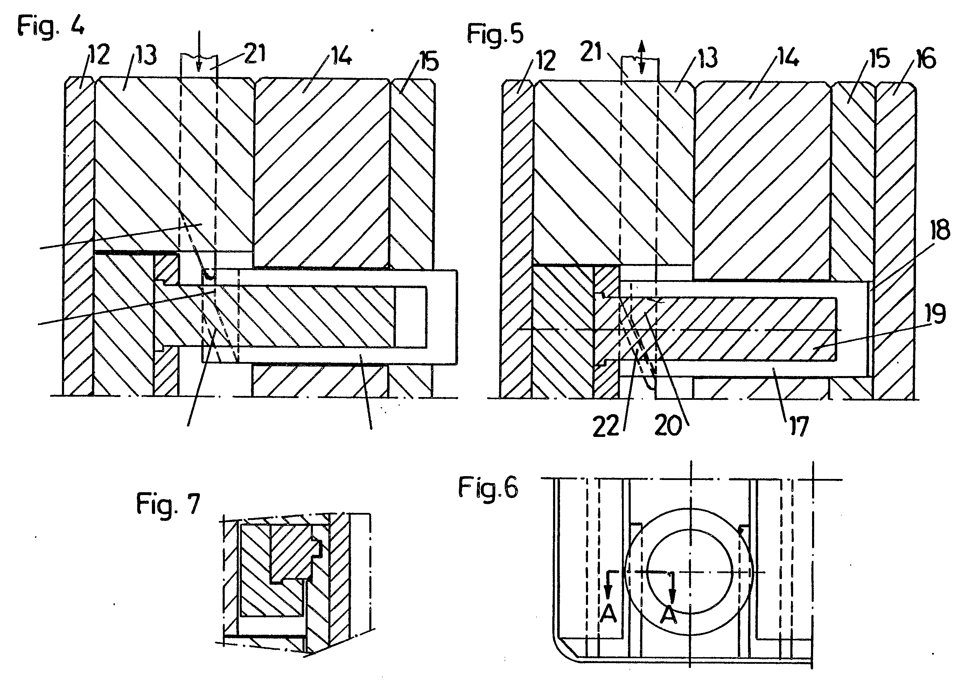

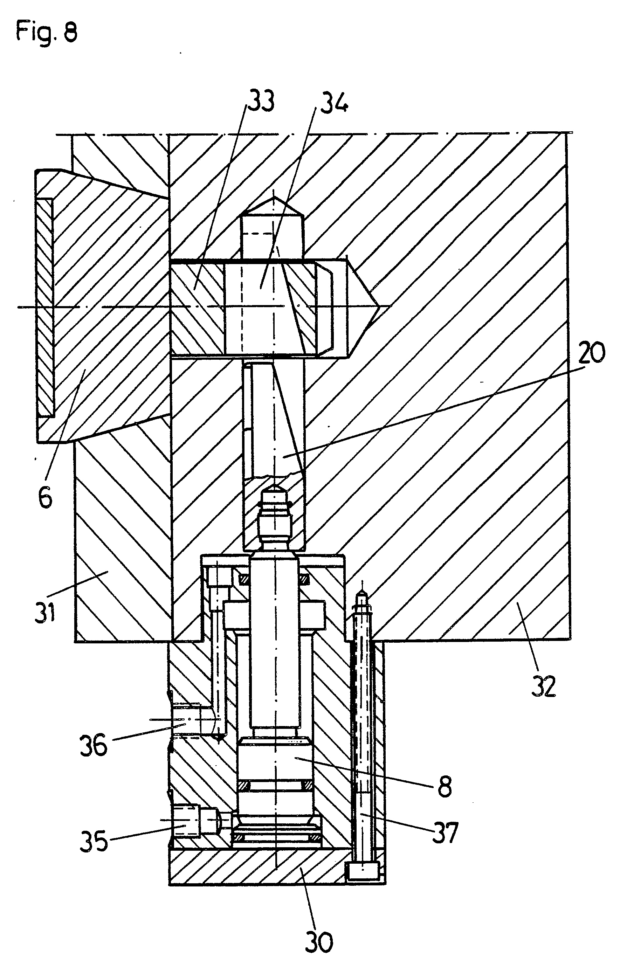

Nachfolgend werden drei Ausführungsbeispiele der Erfindung anhand der Figuren der beiliegenden Zeichnungen eingehend beschrieben. Es zeigen: Fig. 1 einen schematisch gehaltenen Schnitt senkrecht zur Formtrennebene durch eine erfindungsgemäße Spritzgießform im geschlossenen Zustand, Fig. 2 einen gleichen Schnitt durch eine Formhälfte während des Wechsels des Wechseleinsatzes, Fig. 3 einen Schnitt nach der Linie A-B der Fig. 1, Fig. 4 einen Schnitt analog zu Fig. 2 bei einem weiteren Ausführungsbeispiel der Erfindung, Fig. 5 einen gleichen Schnitt wiederum bei geschlossenem Werkzeug, Fig. 6 die Ansicht C der Fig. 5, wobei der Wechseleinsatz weggelassen wurde, Fig. 7 einen Schnitt A-A der Fig. 6 und Fig. 8 zeigt einen Schnitt analog der Fig. 1 durch eine Spritzgießform gemäß einem weiteren Ausführungsbeispiel der Erfindung.

In den gezeigten Ausführungsbeispielen sind natürlich mehrere der in den Figuren gezeigten Spannteile über die Form verteilt. Da sie alle gleich ausgebildet sind, genügt die Besprechung jeweils eines Spannteiles pro Ausführungsbeispiel.

In den Figuren der Zeichnung ist jeweils nur die Spritzgießform gezeigt und nicht die Formhalteplatte der Spritzgießmaschine.

Nachfolgend wird das Ausführungsbeispiel der Fig. 1 - 3 beschrieben.

Die Platten 1, 2, 3 bilden zusammen die linke, d.h. schließseitige Hälfte der Spritzgießform, während die Platten 4, 5 die rechte Seite der Spritzgießform bilden.

Die linke Formhälfte ist mit Wechseleinsätzen 6 versehen, die auswechselbar in der Platte 3 und somit in der Spritzgießform selbst gehalten sind.

Im Ausführungsbeispiel nach den Fig. 1 - 3 ist jeder Formeinsatz an der Rückseite mit mehreren Halteschrauben 7 versehen, die in den Wechseleinsatz 6 eingeschraubt sind.

In den Platten 1, 2 der linken Hälfte der Spritzgießform lagert ein doppelt beaufschlagbarer Hydraulikkolben 8 mit einer Kolbenstange 9.

Am vorderen Ende der Kolbenstange 9 ist eine einseitig offene T-Nut 10 ausgebildet. In dieser T-Nut 10 ist der Kopf der Halteschraube 7 gehalten.

Zum Auswechseln des Wechseleinsatzes 6 wird die Spritzgießform geöffnet, bleibt jedoch an der Formhalteplatte montiert. Der Kolben 8 wird mit Druck beaufschlagt und verschiebt bei geöffnetem Werkzeug mit der Kolbenstange 9 den Wechseleinsatz 6 in der Richtung des Pfeiles W aus der Zentrierung, die von einem Zentrierkonus 11 gebildet wird.

Das Werkzeug befindet sich dabei in der in Fig. 2 gezeigten Position. Danach kann der Wechseleinsatz 6 aus der T-Nut 10 in der Kolbenstange 9 gehoben werden und ein neuer Wechseleinsatz 6 in gleicher Weise mit der Kolbenstange verankert werden.

Anschließend wird der Kolben 8 an der Seite, an der die Kolbenstange 9 ausgebildet ist, beaufschlagt und zieht den Wechseleinsatz 6 in der Richtung des Pfeiles S in die Form, d.h. in die Platte 3. Die Positionierung des Wechseleinsatzes 6 erfolgt automatisch durch den Zentrierkonus 11.

In der eingefahrenen Position bleibt der Kolben 8 mit Druck beaufschlagt.

Der Wechsel des Wechseleinsatzes 6 kann sowohl manuell als auch automatisch durch eine Vorrichtung erfolgen. Mit dem gleichen System können ein oder mehrere Einsätze auf der schließ- bzw. düsenseitigen Werkzeughälfte gewechselt werden.

Anschließend wird das Ausführungsbeispiel der Fig. 4 - 7 beschrieben.

Bei diesem Ausführungsbeispiel wird die linke Formhälfte von Platten 12, 13, 14, 15 gebildet, während die rechte Formhälfte in Fig. 5 von der Platte 16 dargestellt wird.

In der linken Formhälfte befinden sich wiederum Wechseleinsätze 17, die im Ausführungsbeispiel zylindrisch ausgebildet sind und zusammen mit der Formplatte 16 der rechten Formhälfte und der Formplatte 15 der linken Formhälfte die Spritzgießhohlräume 18 abgrenzen.

Jeder Wechseleinsatz ist auf einer dornartigen Halterung 19 geführt, die auch als Kühlkörper ausgebildet sein kann.

Die Spannteile sind in diesem Ausführungsbeispiel als Schieber 20 ausgeführt.

Der Wechsel der Wechseleinsätze geht bei geöffnetem Werkzeug folgendermaßen vor sich.

Ein Zylinder 21 fährt nach der Druckbeaufschlagung auf und schiebt über eine Schrägkulisse 22 den Wechseleinsatz 17 nach vorn, d.h. von der in der Fig. 5 gezeigten Position in die in der Fig. 4 gezeigte. Der Schieber 20 ist am vorderen Ende, wie aus den Fig. 4 und 5 ersichtlich, keilförmig ausgebildet und im Keilbereich mit einem seitlichen Steg versehen, der die Schrägkulisse 22 bildet.

In der ausgefahrenen Stellung wird die Nutführung 23 des Wechseleinsatzes 17 frei, d.h. der Schieber 20 befindet sich in der in Fig. 4 gezeigten Stellung. Der Wechseleinsatz 17 kann wiederum manuell oder automatisch mittels einer Vorrichtung gewechselt werden. Anschließend wird ein neuer Wechseleinsatz 17 in die Formhälfte eingeschoben, bis er mit seiner Anschlagfläche 24 am Schieber 20 anliegt. Der Wechseleinsatz 17 wird nun durch die Einfahrbewegung des Schiebers 20 in die Formplatten 13, 14, 15 des Werkzeuges gezogen. Dabei gelangt der Steg der die Schrägkulisse 22 bildet, in die Nutführung 23 des Wechseleinsatzes 17.

Durch die Wahl des Spannwinkels der Schrägkulisse 22 und der Nutführung 23 ist das System selbsthemmend. Mit dem gleichen System können auch ein oder mehrere Einsätze auf der schließ- bzw. düsenseitigen Werkzeughälfte gewechselt werden.

Die Fig. 8 beschreibt ein weiteres Ausführungsbeispiel der Erfindung. Hier wird die eine Hälfte der Spritzgießform von Platten 31,32 gebildet.

In die Spritzgießform sind die Wechseleinsätze 6 eingesetzt, die Haltebolzen 33 aufweisen. Die Haltebolzen sind mit durchgehenden Öffnungen 34 versehen.

Seitlich an die Spritzgießform, d.h. an die Platte 32, ist ein hydraulisch beaufschlagter Spannzylinder 30 angeflanscht. Der Spannzylinder 30 betätigt einen Schieber 20, der in die Öffnung 34 des Haltebolzens 33 einführbar ist. Der Schieber 20 ist, wie aus der Figur der Zeichnung ersichtlich, keilförmig ausgeführt und die Öffnung 34 weist eine korrespondierende Kontur auf, so daß es beim Einsetzen des Schiebers 20 in die Öffnung 34 zu einem Anzug senkrecht zur Formtrennebene kommt.

Wie in den zuvor beschriebenen Ausführungsbeispielen ist der Kolben 8 des Schiebers 20 doppelseitig beaufschlagbar, so daß der Wechseleinsatz 6 mit demselben Spannzylinder 30 von der Spritzgießform lösbar ist.

Die Zufuhr von Drucköl erfolgt über Anschlüsse 35, 36. Der Spannzylinder 30 ist vorteilhaft mittels Bolzen 37 an der Platte 32 der Spritzgießform gehalten.

Auch bei den zuletzt beschriebenen Ausführungsbeispielen ist es vorteilhaft, wenn bei eingesetztem Wechseleinsatz 6 die Kolben 8,21 der Spanneinrichtung druckbeaufschlagt bleiben.

## Ansprüche

1. Spritzgießform mit mindestens einem austauschbaren Wechseleinsatz, der mittels einer Verriegelungseinrichtung in der Form gehalten ist, dadurch gekennzeichnet, daß die Verriegelungseinrichtung mindestens einen kraftbeaufschlagbaren Spannteil umfaßt, der am Wechseleinsatz angreift und in der Form verschiebbar ist.

2. Spritzgießform nach Anspruch 1, dadurch gekennzeichnet, daß der Spannteil pneumatisch oder hydraulisch beaufschlagbar ist.

3. Spritzgießform nach Anspruch 1, dadurch gekennzeichnet, daß der Spannteil eine Kolbenstange (9) umfaßt, die mit einem doppelt wirkenden Kolben (8) verbunden ist und daß die Bewegungsrichtung der Kolbenstange (9) senkrecht zur Formtrennebene verläuft.

4. Spritzgießform nach Anspruch 3, dadurch gekennzeichnet, daß die Kolbenstange (9) beim Wechseleinsatz (6) mit einer T-Nut (10) versehen ist, in die ein Haltemittel des Wechseleinsatzes, insbesondere eine Halteschraube (7), einschiebbar ist, wobei die Einschieberichtung des Haltemittels in die T-Nut (10) senkrecht zur Verschieberichtung der Kolbenstange (9) ist.

5. Spritzgießform nach Anspruch 4, dadurch gekennzeichnet, daß die T-Nut (10) einseitig offen ist.

6. Spritzgießform nach Anspruch 1, dadurch gekennzeichnet, daß der Wechseleinsatz einen Zentrierkonus (11) aufweist, der formschlüssig in der Spritzgießform aufgenommen ist.

7. Spritzgießform nach Anspruch 1, dadurch gekennzeichnet, daß der Spannteil ein Schieber (20) ist, der in einer Ebene, die parallel zur Formtrennebene liegt, verfahrbar ist.

8. Spritzgießform nach Anspruch 7, dadurch gekennzeichnet, daß der Schieber (20) vorne keilförmig ist und im keilförmigen Bereich einen T-förmigen Querschnitt aufweist, wobei der Wechseleinsatz (17) an mindestens einer Seite mit einer schräg verlaufenden Nut (30) versehen ist, in die ein Steg (22) des Schiebers (20) einschiebbar ist.

9. Spritzgießform nach Anspruch 8, dadurch gekennzeichnet, daß der Wechseleinsatz (17) zylindrish ist.

10. Spritzgießform nach Anspruch 8, dadurch gekennzeichnet, daß sich die Nut (30) über etwa zwei Drittel der Breite des Wechseleinsatzes erstreckt und daß sich vor der Nut (30) eine Ausnehmung befindet, die von einer Anschlagfläche (24) für den Schieber (20) begrenzt wird.

11. Spritzgießform nach Anspruch 7, dadurch gekennzeichnet, daß der Schieber (20) an Haltebolzen des Wechseleinsatzes (6) angreift.

12. Spritzgießform nach Anspruch 7, dadurch gekennzeichnet, daß an der Seite einer Platte (32) der Spritzgießform ein Spannzylinder (30) montiert ist, der den Schieber (20) betätigt.

Fig. 1

Fig. 2

Fig. 3

Fig. 4

Fig. 5

Fig. 6

Fig. 7

Fig. 8

| | EINSCHLÄGIGE DOKUMENTE | | EP 88111584.4 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | EP - A2 - 0 184 744 (WÖRNER) <br> * Gesamt * <br> -- | | B 29 C 45/17 |
| A | EP - A1 - 0 092 685 (BATTENFELD) <br> * Gesamt * <br> -- | | |
| A | EP - A1 - 0 092 686 (BATTENFELD) <br> * Gesamt * <br> ---- | | |

RECHERCHIERTE SACHGEBIETE (Int. Cl.4)

B 29 C 45/00

Der vorliegende Recherchenbericht wurde für alle Patentansprüche erstellt.

| Recherchenort | Abschlußdatum der Recherche | Prüfer |
|---|---|---|
| WIEN | 25-11-1988 | MAYER |